Europäisches Patentamt

(19) European Patent Office    (11) Veröffentlichungsnummer: **0 113 021**

Office européen des brevets    **B1**

(12) **EUROPÄISCHE PATENTSCHRIFT**

(45) Veröffentlichungstag der Patentschrift:    (51) Int. Cl.⁴: **B 01 D 21/04,** B 01 D 35/08
15.10.86

(21) Anmeldenummer: 83111699.1

(22) Anmeldetag: 23.11.83

(54) **Sandfang.**

(30) Priorität: 26.11.82 DE 3243835

(43) Veröffentlichungstag der Anmeldung:
11.07.84 Patentblatt 84/28

(45) Bekanntmachung des Hinweises auf die Patenterteilung:
15.10.86 Patentblatt 86/42

(84) Benannte Vertragsstaaten:
AT BE CH FR GB LI SE

(56) Entgegenhaltungen:
DE-C-319 286
FR-A-2 315 302
FR-A-2 402 610
FR-A-2 482 934
FR-A-2 489 796

(73) Patentinhaber: Egger, Karl, St. Johannes Strasse
31, D-8901 Königsbrunn (DE)

(72) Erfinder: Egger, Karl, St. Johannes Strasse 31,
D-8901 Königsbrunn (DE)

(74) Vertreter: Munk, Ludwig, Dipl.- Ing., Patentanwalt
Prinzregentenstrasse 1, D-8900 Augsburg (DE)

## Beschreibung

Die Erfindung betrifft einen Sandfang zur Gewinnung von in Wasser aufgeschwemmtem Sand mit einem Trog, der mit einem Zulauf für das Wasser-Sandgemisch und mit einem Wasserablauf versehen ist und in den mindestens ein antreibbares Becherrad eintaucht, dem der am Boden des Trogs sich absetzende Sand mittels mindestens einer antreibbaren, koaxial zum Becherrad angeordneten Schnecke zuführbar ist.

Anordnungen dieser Art dienen in der Regel zur Rückgewinnung des in Brausewasser von Siebwerken oder des im Wasser von Kieswaschanlagen enthaltenen Feinsands. Bei den bekannten Anordnungen sind das Becherrad und die Förderschnecke mit einer gemeinsamen, den Trog durchsetzenden Hauptwelle versehen, und über ein Vorgelege gemeinsam antreibbar. Hierbei bilden demnach das Becherrad und die Förderschnecke eine bauliche Einheit mit einem gemeinsamen Antrieb. Eine solche Anordnung wird beispielsweise in FR-A-23 15 302 beschrieben. Nachteilig hierbei ist, daß das Becherrad und die Förderschnecke somit stets mit gleicher Geschwindigkeit angetrieben werden. In manchen Fällen wurde zwar bereits eine Verstellbarkeit der Drehzahl der Hauptwelle vorgesehen.

Dies führt jedoch lediglich zu einer gleichmäßigen Erhöhung bzw. Absenkung der Drehzahl der gesamten aus Becherrad und Förderschnecke bestehenden Einheit und läßt somit eine Anpassung der Drehzahl an die Bedürfnisse des einen oder des anderen Elements zu, nicht jedoch eine Anpassung der Drehzahl an die Bedürfnisse beider Elemente. In diesem Zusammenhang ist davon auszugehen, daß sich bei einer zu langsamen Geschwindigkeit der Förderschnecke im Trog ein Sandrückstau bilden kann, was zu einer erhöhten Beanspruchung der Förderschnecke und damit zu einem erhöhten Verschleiß und gleichzeitig zu einem erhöhten Energiebedarf führt. Gleichzeitig ist davon auszugehen, daß sich bei einer zu schnellen Drehzahl des Becherrads nur eine unvollständige Füllung der einzelnen Schöpfbecher ergibt. Bei den bekannten Anordnungen, bei denen das Becherrad und die zugeordnete Förderschnecke starr miteinander verbunden sind, führt eine entsprechende Absenkung der Drehzahl des Becherrads zu einer gleichzeitigen Absenkung der Drehzahl der Förderschnecke, wodurch sich ein Sandrückstau im Trog mit allen oben angegebenen Nachteilen ergeben kann. Um dem abzuhelfen, muß die Drehzahl erhöht werden, was zu einer gleichzeitigen Erhöhung der Drehzahl des Becherrads führt. Die Folge davon ist eine unvollständige Füllung der einzelnen Schöpfbecher. In diesem Zusammenhang ist nun davon auszugehen, daß der Bereich der Schöpfbecher, der nicht mit Sand ausgefüllt ist, mit Wasser gefüllt ist.

Dieses Wasser läuft beim Anheben der Schöpfbecher aus diesen ab. In diesem Wasser ist jedoch Feinstkorn aufgeschwemmt, das somit in den Trog zurückgelangt. Je höher beim verarbeiteten Sand der Anteil an Feinstkorn ist, umso größer ist diese Ausschwemmung. Der ausgebrachte Sand weist daher nicht die gewünschte Sortierung auf. Gleichzeitig führt die Rückführung von Feinstkorn in den Trog zu einer Eindickung des Troginhalts, was ebenfalls zu einer erhöhten Beanspruchung der Schnecke und damit zu einem erhöhten Verschleiß und zu einem erhöhten Energiebedarf führen kann. Trotz des geschilderten Ablaufs des Wassers im Bereich des Anstiegs des Becherrads ist der Wassergehalt des ausgebrachten Guts infolge der Mitnahme von Wasser aus dem Trog verhältnismäßig hoch, so daß zur Erzielung eines tropffreien Materials ein vergleichsweise hoher Aufwand erforderlich ist. Ein weiterer Nachteil der bekannten Anordnungen ist darin zu sehen, daß beim Abschalten der Zufuhr des Wasser-Sandgemisches zum Trog noch ein verhältnismäßig langer Nachlauf des Sandfanges erforderlich ist, um den Trog soweit erforderlich zu entleeren. Der Grund hierfür ist wiederum darin zu sehen, daß bei sinkender Sandkonzentration im Trog die erreichbare Füllung der Schöpfbecher ebenfalls sinkt, so daß immer mehr Wasser aufgenommen wird und mit diesem immer mehr Sand wieder in den Trog zurückgeschwemmt wird.

Hierum ausgehend ist es daher die Aufgabe der vorliegenden Erfindung, einen Sandfang gattungsgemäßer Art unter Vermeidung der Nachteile der bekannten Anordnungen mit einfachen und daher kostengünstigen Mitteln so zu verbessern, daß in jedem Falle eine möglichst weitgehende Füllung der Schöpfelemente des Becherrads erreichbar ist.

Die Lösung dieser Aufgabe gelingt gemäß der Erfindung in überraschend einfacher Weise dadurch, daß jedes Becherrad unabhängig von der jeweils zugeordneten Schnecke bzw. den jeweils zugeordneten Schnecken antreibbar ist bzw. sind und daß wenigstens eine der beiden Antriebsgeschwindigkeiten variabel ist.

Diese Maßnahmen stellen sicher, daß in jedem Betriebspunkt, d. h. bei jeder Sandkonzentration und Sandart ein Gleichgewicht zwischen der dem Schöpfwerk zugeführten und dem vom Schöpfwerk abgeführten Sandmenge einstellbar und damit eine vollständige Füllung der Schöpfelemente erzielbar ist, ohne daß ein Sandrückstau im Trog zu befürchten wäre. Infolge der vollständigen Füllung der Schöpfelemente mit Sand können diese nur wenig oder gar kein Wasser aufnehmen, so daß aus den ansteigenden Schöpfelementen auch keine nennenswerte Wassermenge ablaufen muß und damit auch keine nennenswerte Ausschwemmung von Feinstkorn zu befürchten ist. Hierdurch ist demnach sichergestellt, daß das ausgebrachte Gut auch die gewünschte Sortierung hinsichtlich der Korngrößenanteile aufweist, was gegenüber dem Stand der Technik eine Qualitätssteigerung ermöglicht. Infolge der hier in vorteilhafter Weise unterdrückten Ausschwemmung von Feinstkorn beim Anstieg der Schöpfelemente kann mit einem Sandfang erfindungsgemäßer Art auch materialzuverlässig verarbeitet werden, das einen besonders hohen Anteil an feinen Korngrößen aufweist, was die Einsatzbreite verbessert. Da die Schöpfelemente hier in vorteilhafter Weise viel Sand und dementsprechend wenig Wasser aufnehmem können, ergibt sich beim Anstieg der Schöpfelemente gleichzeitig eine ausgezeichnete Entwässerung des Sands, so daß vielfach auf ein nachgeordnetes Entwässerungssiebwerk verzichtet bzw. dieses besonders kompakt ausgelegt werden kann. Infolge der hier vermiedenen Ausschwemmung von Feinstsand im Bereich des Anstiegs des Schöpfwerks ist in vorteilhafter Weise auch eine Eindickung des Troginhalts und ein Sandrückstau nicht zu befürchten, was eine besonders schonende Betriebsweise und einen geringen Energiebedarf gewährleistet. Gleichzeitig ist hierdurch sichergestellt, daß beim Abschalten der Gemischzufuhr nur eine vergleichsweise geringe Nachlaufzeit benötigt wird, um den noch vorhandenen Sandinhalt aus dem Trog zu entfernen. Die mit der Erfindung erzielbaren Vorteile sind demnach insbesondere in einer ausgezeichneten Wirtschaftlichkeit zu sehen.

Eine vorteilhafte Weiterbildung der übergeordneten Maßnahmen kann darin bestehen, daß der Trog im Eintauchbereich des Schöpfwerks eine von dem Schöpfelementen durchlaufene Vertiefung gegenüber dem vom Räumwerk abräumbaren Boden aufweist. Hierdurch ist sichergestellt, daß der Sand praktisch von oben in die Schöpfelemente des Schöpfwerks eingeworfen wird, was sich vorteilhaft auf dem erzielbaren Füllungsgrad auswirkt.

Der unabhängige Antrieb von Schöpfwerk und Räumwerk ermöglicht in vorteilhafter Weise gegenläufige Antriebsrichtungen, was sich ebenfalls positiv auf den erzielbaren Füllungsgrad der Schöpfelemente auswirken kann.

Eine weitere zweckmäßige Maßnahme kann darin bestehen, daß sowohl die Antriebsgeschwindigkeit des Schöpfwerks bzw. der Schöpfwerke als auch die Antriebsgeschwindigkeit des Räumwerks bzw. der Räumwerke variabel ist. Diese Maßnahme kann im Einzelfall die Einstellung des erwünschten Gleichgewichts erleichtern.

Eine weitere Fortbildung der übergeordneten Maßnahmen kann darin bestehen, daß schöpfwerkseitig und räumwerkseitig jeweils separate Antriebseinrichtungen vorgesehen sind. Diese Maßnahme ergibt einen besonders einfachen Aufbau auch wenn beide Antriebsgeschwindigkeiten variierbar sein sollen. Zweckmäßig können die beiden Antriebseinrichtungen im Bereich einer Trogstirnseite vorgesehen sein, so daß die gegenüberliegende Trogstirnseite für weitere Anbauten zur Verfügung steht.

In weiterer Fortbildung der übergeordneten Maßnahmem kann räumwerkseitig mindestens eine in Troglängsrichtung sich erstreckende, angetriebene Rohrwelle vorgesehen sein, die von einer schöpfwerkseitigen, angetriebenen Welle durchsetzt und antriebsmäßig überragt wird. Diese Maßnahmen ermöglichen eine koaxiale Anordnung von Räumwerk und Schöpfwerk bei gleichzeitigen separatem Antrieb von einer gemeinsamen Antriebsseite her.

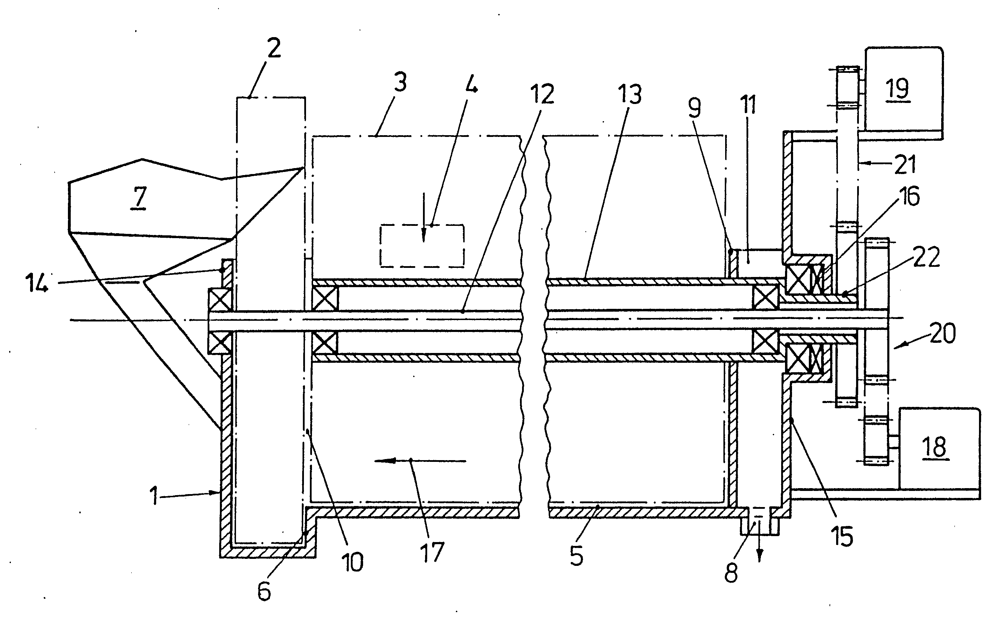

Weitere vorteilhafte Ausgestaltungen und zweckmäßige Fortbildungen der übergeordneten Maßnahmen ergeben sich aus der nachstehenden Beschreibung eines Ausführungsbeispiels anhand der Zeichnung in Verbindu'g mit den restlichen Unteransprüchen.

Die Zeichnung zeigt einen Längsschnitt durch einen erfindumgsgemäßen Sandfang in schematischer Darstellung.

Der in der Zeichnung dargestellte Sandfang besteht aus einem aus Stahlblech herstellbaren Trog 1, in den ein stirnseitig angeordnetes, hier lediglich durch seine Umrißlinien angedeutetes Becherrad 2 eintaucht, dem eine hier ebenfalls lediglich durch ihre Umrißlinien angedeutete Schnecke 3 vorgeordnet ist. Der Trog 1, der über einen Zulauf 4 mit einem Wasser-Sandgemisch, bei dem es sich um das Brausewasser eines Siebwerks bzw. um des Abwasser einer Waschanlage handeln kann, beaufschlagt wird, bildet praktisch einen Klärbehälter, auf dessen Boden 5 sich die im zugeführten Wasser-Sandgemisch enthaltenen Feststoffe absetzen. Die Kontur des Bodens 5 des Trogs 1 ist der Rundung der Schnecke 3 angepaßt und bildet praktisch ein nach oben offenes Schneckengehäuse. Die Schnecke 3 bildet ein Räumwerk, das den Boden 5 abräumt und das abgeräumte Material dem Becherrad 2 zuführt, das ein mit hintereinander angeordnesen Schöpfelementen versehenes Schöpfwerk bildet. Dem Becherrad 2 ist eine Vertiefung 6 gegenüber dem vom Räumwerk abräumbaren Boden 5 zugeordnet, die von den einzelnen, hier nicht näher dargestellten, einfach als aus Siebblech bestehende Schöpfbecher ausgebildeten Schöpfelementen durchlaufen wird. Diese Vertiefung 6 stellt nicht nur sicher, daß der von der Schnecke 3 angeförderte Sand von oben in die Schöpfelemente eingeworfen wird, sondern ermöglicht gleichzeitig auch einen vergleichsweise großen Durchmesser des Becherrads, auf dem somit eine große Anzahl von Schöpfelementen angeordnet werden kann.

Das Becherrad 2 wirft den angehobenen Sand im Bereich des oberen Umkehrpunkts der Schöpfelemente auf eine Rutsche ab. Im dargestellten Ausführungsbeispiel ist dem Becherrad 2 zur Erzielung eines besonders tropffreien Sands ein Entwässerungssiebwerk 7 nachgeordnet. Das hierbei abgetrennte Tropfwasser gelangt über einen Auffangtrichter in den Trog 1 zurück. Zum Ablassen von überschüssigem, geklärtem Wasser ist der Trog 1 mit einem Wasserablauf 8 versehen. Dem Wasserablauf 8 ist eine durch eine Trennwand 9 von der die Schnecke 3 und das Becherrad 2 sowie den Zulauf 4 aufnehmenden Kammer 10 abgetrennte Kammer 11 zugeordnet. In die Kammer 11 und damit in den Wasserablauf 8 gelangt somit lediglich oberflächennahes und damit sauberes Überlaufwasser aus der Kammer 10. Der Wasserablauf 8 kann im oberen Bereich der Kammer 11 vorgesehen sein. Im dargestellten Ausführungsbeispiel befindet sich der Ablauf 8 im unteren Bereich der Kammer 11, so daß in dieser kein Bodensatz entsteht.

Das Becherrad 2 und die Schnecke 3 sind mit jeweils variabler Geschwindigkeit unabhängig voneinander antreibbar. Hierzu ist das Becherrad 2 auf einer den Trog 1 durchsetzenden Welle 12 aufgenommen, die durch die als Rohrwelle 13 ausgebildete Schneckenwelle hindurchgeführt ist und diese beidseitig überragt. Die das Becherrad 2 aufnehmende Welle 12 ist einerseits an der dem Becherrad 2 benachbarten Stirnwand 14 des Trogs 1 und andererseits in der Rohrwelle 13 gelagert. Diese ist einerseits an der vom Becherrad 2 entfernten Trennwand 9 bzw. hier an der dieser benachbarten Trogstirnwand 15 und andererseits auf der die durchsetzenden Welle 12 gelagert. Im Bereich der trogseitigen Lagerung der Rohrwelle 13 ist ein Axialdrucklager 16 vorgesehen, um den der durch dem Pfeil 17 angedeuteten Förderrichtung der Schnecke 3 entgegenlaufenden Reaktionsdruck aufzunehmen und sicher auf den Trog 1 abzuleiten. Die Lagerung der beiden Wellen ist in der Zeichnung lediglich schematisch angedeutet. Dasselbe gilt für die Verbindung der Wellen mit dem Becherrad 2 bzw. der Schnecke 3.

Den Wellen 12 bzw. 13 sind Antriebseinrichtungen zugeordnet. Die Antriebsseite ist im dargestellten Ausführungsbeispiel auf die dem Siebwerk 7 gegenüberliegende Trogstirnseite verlegt. Der Antrieb kann über einen gemeinsamen Motor und ein Vorgelege mit zwei den beiden anzutreibenden Wellen zugeordneten Ausgängen erfolgen. Im dargestellten Ausführungsbeispiel ist jeder Welle eine aus einem Motor 18 bzw. 19 und einem Vorgelege 20 bzw. 21 bestehende Antriebseinrichtung zugeordnet, was eine übersichtliche Bauweise ergibt und die Variation der Drehzahl beider Wellen erleichtert. Hierzu können hier einfach regelbare Motoren Verwendung finden. Die Vorgelege 20 bzw. 21 können einfach als Kettengetriebe bzw. Rädergetriebe ausgebildet sein. Der trogseitige Lagerzapfen 22 der Rohrwelle 13 idt dabei so weit über die Lagerung hinaus verlängert, daß ein entsprechendes Antriebselement aufgenommen werden kann. Die innere Welle 12 ragt antriebsseitig ebenfalls so weit über den Lagerzapfen 22 hinaus, daß ein entsprechendes Antriebselement aufgenommen werden kann.

Die Motoren 18 bzw. 19 sollen hinsichtlich der Drehzahl steuerbar sein. Diese wird dabei jeweils so eingestellt, daß sich ein Gleichgewicht zwischen der von der Schnecke 3 dem Becherrad 2 zugeführten Sandmenge und der vom Becherrad 2 aufnehmbaren Sandmenge ergibt und gleichzeitig ein Sandrückstau im Bereich der Schnecke 3 unterbleibt. Dies gewährleistet eine zuverlässige Füllung der Schöpfelemente des Becherrads 2 und damit eine gute Entwässerung des angehobenen Guts und infolge unterbleibender Ausschwemmung die Einhaltung der gewünschten Kornsortierung. Gleichzeitig ergibt sicht hierbei ein schonender und energiesparender Betrieb der Schnecke 3. Die Drehrichtungen von Becherrad 2 und Schnecke 3 können gleichläufig sein. Im dargestellten Ausführungsbeispiel soll Gegenläufigkeit vorgesehen sein, was sich positiv auf die Füllung der Schöpfelemente des Becherrads 2 auswirkt, da hierbei der Sand von der Schnecke 2 in die Schöpfelemente hineingeschoben werden kann.

Vorstehend ist zwar ein bevorzugtes Ausführungsbeispiel. der Erfindung näher erläutert, ohne daß jedoch hiermit eine Beschränkung verbunden sein soll. Vielmehr stehendem Fachmann eine Reihe von Möglichkeiten zur Verfügung, um den allgemeinen Gedanken der erfindungsgemäßen Lösung an die Verhältnisse des Einzelfalls anzupassen. So könnte das Becherrad auch im Bereich der Trogmitte angeordnet sein und mit zwei seitlichen, unabhängig hiervon antreibbaren Schneckenabschnitten so zusammenarbeiten, daß sich das erwünschte Gleichgewicht ohne Sandrückstau ergibt.

## Patentansprüche

1. Sandfang zur Gewinnung von in Wasser aufgeschwemmtem Sand mit einem Trog (1), der mit einem Zulauf (4) für das Wasser-Sandgemisch und einem Wasserablauf (8) versehen ist und in den mindestens ein antreibbares Becherrad (2) eintaucht, dem der am Boden (5) des Trogs (1) sich absetzende Sand mittels einer antreibbaren, koaxial zum Becherrad (2) angeordneten Schnecke (3) zuführbar ist, dadurch gekennzeichnet, daß jedes Becherrad (2) unabhängig von der jeweils zugeordneten Schnecke (3) bzw. den jeweils zugeordneten Schnecken (3) antreibbar ist bzw. sind und daß wenigstens eine der beiden Antriebsgeschwindigkeiten variabel ist.

2. Sandfang nach Anspruch 1, dadurch gekennzeichnet, daß beide Antriebsgeschwindigkeiten variabel sind.

3. Sandfang nach einem der vorhergehenden Ansprüche, dadurch gekennzeichnet, daß der becherradseitige Antrieb gegenläufig zum schneckenseitigen Antrieb erfolgt.

4. Sandfang nach einem der vorhergehenden Ansprüche, dadurch gekennzeichnet, daß becherradseitig und schneckenseitig jeweils separate Antriebseinrichtungen (18, 20 bzw. 19, 21) vorgesehen sind.

5. Sandfang nach einem der vorhergehenden Ansprüche, dadurch gekennzeichnet, daß im Bereich einer Trogstirnwand (15) mindestens eine becherradseitige und eine schneckenseitige Antriebseinrichtung (18, 20 bzw. 19, 21) vorgesehen ist.

6. Sandfang nach einem der vorhergehenden Ansprüche, bei dem ein im Bereich einer Trogstirnwand (14) angeordnetes Becherrad vorgesehen ist, dadurch gekennzeichnet, daß sowohl die becherradseitige, als auch die schneckenseitige Antriebseinrichtung im Bereich der dem Becherrad (2) gegenüberliegenden Trogstirnwand (15) angeordnet sind.

7. Sandfang nach einem der vorhergehenden Ansprüche, dadurch gekennzeichnet, daß schneckenseitig mindestens eine in Troglängsrichtung sich erstreckende, angetriebene, als Schneckenwelle ausgebildete und in axialer Richtung mittels eines entgegen der Förderrichtung wirksamen Axialdrucklagers (16) abgestützte Rohrwelle (13) vorgesehen ist, die von einer becherradseitigen, angetriebenen Welle (12) durchsetzt und antriebsseitig überragt ist und daß das Becherrad (2) mit seiner Nabe auf der die Rohrwelle (13) durchsetzenden Welle (12) aufgenommen ist.

8. Sandfang nach Anspruch 7, dadurch gekennzeichnet, daß die Rohrwelle (13) mit ihrem vom Becherrad (2) abgewandten Ende in einer Trogstirnwand (15) und mit ihrem dem Becherrad (2) zugewandten Ende auf der sie durchsetzenden Welle (12) gelagert ist, die ihrerseits mit ihrem antriebsseitigen Endbereich in der Rohrwelle (13) und mit ihrem gegenüberliegenden Endbereich vorzugsweise an der der Antriebsseite gegenüberliegenden Trogstirnwand (14) gelagert ist.

9. Sandfang nach einem der vorhergehenden Ansprüche, dadurch gekennzeichnet, daß der Trog (1) im Eintauchbereich des Becherrads (2) eine von den Schöpfelementen durchlaufene Vertiefung (6) gegenüber dem von einer oder mehreren Schnecken (3) abräumbaren Boden (5) aufweist.

## Claims

1. Sand collector for the recovery of sand suspended in water, having a trough (1), which is provided with an entry (4) for the water/sand mixture and a water outlet (8) and into which at least one drivable bucket wheel (2) dips, wo which the sand settling on the floor (5) of the trough (1) may be conducted by means of at least one drivable worm (3) arranged coaxially to the bucket wheel (2), characterized in that each bucket wheel (2) is drivable independently of the respective associated worm or worms (3) and that at least one of the two drive speeds is variable.

2. Sand collector according to claim 1, characterized in that both drive speeds are variable.

3. Sand collector according to one of the preceding claims, characterized in that the drive in respect of the bucket wheel or wheels takes place in the opposite direction to that in respect of the worm or worms.

4. Sand collector according to one of the preceding claims, characterized in that in respect of the bucket wheel or wheels and the worm or worms respectively, separate drive arrangements (18, 20 and 19, 21 respectively) are provided.

5. Sand collector according to one of the preceding claims, characterized in that in the region of one trough end wall (15) at least one drive installation is provided in respect of the bucket wheel or wheels and one is provided in respect of the worm or worms (18, 20 or 19, 21 respectively).

6. Sand collector according to one of the preceding claims, wherein, arranged in the region of one trough end wall (14) a bucket wheel is provided, characterized in that the drive installation in respect of both the bucket wheel and the worm are disposed in the region of the trough end wall (15) located opposite to the bucket wheel (2).

7. Sand trap according to one of the preceding claims having coaxial arrangement of bucket elevator and clearing mechanism, characterized in that in respect of the worm or worms at least one driven hollow shaft (13) extending in the longitudinal direction of the trough, formed as a worm shaft and supported in axial direction by means of an axial pressure bearing (16) operative against the conveying direction is provided through which shaft a driven shaft (12) in respect of the bucket wheel penetrates and extends beyond the hollow shaft on the drive side and that the bucket wheel (2) is carried with its hub on the shaft (12) penetrating the hollow shaft (13).

8. Sand trap according to claim 7, characterized in that the hollow shaft (13) is mounted with its end which is directed away from the bucket wheel (2) in a trough end wall (15) and with its end which is directed towards the bucket wheel (2) on the shaft (12) which is carried through it, which shaft (12) for its part is mounted with its drive-side end region in the hollow shaft (13) and with its oppositely disposed end region preferably on the trough end wall (14) located opposite to the drive side.

9. Sand trap according to one of the preceding claims, characterized in that the trough (1) has, in the dipping region of the bucket wheel (2), a depression (6) passe through by the bucket elements, in front of the floor which is clearable by the worm or worms (3).

## Revendications

1. Séparateur de sable destiné à la récupération de sable à partir d'une suspension aqueuse de sable, au moyen d'un bac (1), présentant une ouverture d'entrée (4) pour l'alimentation en mélange d'eau et de sable et une ouverture de sortie d'eau (8), et équipé d'au moins une roue à godets (2) susceptible d'être commandée et y pénétrant, roue à godets (2) vers laquelle est poussé le sable, déposé par sédimentation sur le fond (5) du bac (1), au moyen d'une vis de transport (3) susceptible d'être commandée et montée coaxialement par rapport à ladite roue à godets (2), caractérisé en ce que chaque roue à godets (2) est susceptible d'être commandée indépendamment de la vis ou des vis de transport (3) y associées, et en ce qu'au moins une des deux vitesses de commande est variable.

2. Séparateur de sable selon la revendication 1, caractérisé en ce que les deux vitesses de commande sont variables.

3. Séparateur de sable selon l'une ou l'autre des revendications précédentes 1-2, caractérisé en ce que le sens de la commande de ladite roue à godets (2) est opposé à celui de ladite vis de transport (3).

4. Séparateur de sable selon l'une ou l'autre des revendications précédentes 1-3, caractérisé en ce que pour la commande de la roue à godets (2) et pour celle de la vis de transport (3) sont prévus des dispositifs de commande séparés (10, 20 et 19, 21).

5. Séparateur de sable selon l'une ou l'autre des revendications précédentes 1-4, caractérisé en ce qu'au niveau d'une des parois frontales (15) du bac (1) sont disposés au moins un dispositif de commande (18,20) pour la roue à godets (2) et un dispositif de commande (19,21) pour la vis de transport (3).

6. Séparateur de sable selon l'une ou l'autre des revendications précédentes 1-5, équipé d'une roue à godets (2) au niveau d'une des parois frontales (14) du bac (1), caractérisé en ce que le dispositif de commande de la roue à godets (2) et celui de la vis de transport (3) sont disposés tous les deux au niveau de la paroi frontale du bac (15) opposée à la roue à godets (2).

7. Séparateur de sable selon l'une ou l'autre des revendications précédentes 1-6, caractérisé en ce qu'il est équipé, du côté de la vis de transport (3), d'au moins un arbre creux (13) commandé, s'étendant selon la direction longitudinale du bac (1), exécuté comme arbre de vis de transport et s'appuyant sur un palier de butée axial (16) agissant dans le sens opposé à celui du transport, cet arbre creux (13) étant traversé par un arbre commandé (12) situé du côté de la roue à godets (2) et prolongé au-delà de cet arbre creux (13) du côté de la commande, et en ce que ladite roue à godets (2) est avec son moyeu montée sur cet arbre commandé (12) passant par ledit arbre creux (13).

8. Séparateur de sable selon la revendication 7, caractérisé en ce que ledit arbre creux (13) est, avec son bout écarté de la roue à godets (2), supporté dans une des parois frontales (15) du bac (1) et est, avec son bout situé du côté de la roue à godets (2), supporté par l'arbre (12) qui le traverse, cet arbre (12) étant, avec son bout situé du côté de la commande, supporté dans cet arbre creux (13) et, avec son bout opposé, supporté de préférence dans la paroi frontale (14) du bac, opposée au côté de la commande.

9. Séparateur de sable selon l'une ou l'autre des revendications précédentes 1-8, caractérisé en ce que le bac (1) présente, dans la zone de pénétration de la roue à godets (2), une fosse (6), aménagée dans le fond (5) balayé par une ou plusieurs vis de transport (3), fosse dans laquelle pénétrent les godets de la roue à godets (2).

0113021